# EUROPEAN PATENT SPECIFICATION

(11) **EP 4 007 397 B1**
(45) Date of publication and mention of the grant of the patent: **23.07.2025**
(21) Application number: 19939925.4
(22) Date of filing: 30.07.2019
(51) Int. Cl.: H04W 74/08, H04W 74/0833, H04W 56/00, H04L 5/00

(54) **TERMINAL**
ENDGERÄT
TERMINAL

(43) Date of publication of application: 01.06.2022
(73) Proprietor: NTT DOCOMO, INC., Chiyoda-Ku Tokyo 100-6150 (JP)
(72) Inventor: KURITA Daisuke, Tokyo 100-6150 (JP); HARADA Hiroki, Tokyo 100-6150 (JP); NAGATA Satoshi, Tokyo 100-6150 (JP); WANG Jing, Beijing 100190 (CN)
(74) Representative: Hoffmann Eitle
(86) International application number: PCT/JP2019/029893
(87) International publication number: WO 2021/019698

(56) References cited:
- VIVO: "Remaining issues on RACH procedure", vol. RAN WG1, no. Sanya, China; 20180416 - 20180420, 15 April 2018 (2018-04-15), XP051426104, Retrieved from the Internet <URL:http://www.3gpp.org/ftp/Meetings%5F3GPP%5FSYNC/RAN1/Docs/> [retrieved on 20180415]
- VIVO: "PRACH resource selection", vol. RAN WG2, no. Busan, Korea; 20180521 - 20180525, 20 May 2018 (2018-05-20), XP051443934, Retrieved from the Internet <URL:http://www.3gpp.org/ftp/Meetings%5F3GPP%5FSYNC/RAN2/Docs/> [retrieved on 20180520]
- ERICSSON: "Procedure for Two-step RACH", 3GPP TSG RAN WG1, 17 May 2019 (2019-05-17), XP051728624
- VIVO: "RACH Resource Selection for Msg1 in NR-U", 3GPP TSG RAN WG2, 17 May 2019 (2019-05-17), XP051729123
- SAMSUNG: "Random Access Resource Selection in NR-U", 3GPP TSG RAN WG2 #106 R2-1905707, 17 May 2019 (2019-05-17), XP051729206

## Description

### TECHNICAL FIELD

The present invention relates to a terminal that performs radio communication, and particularly relates to a terminal that receives synchronization signal blocks (SSBs).

### BACKGROUND ART

The 3rd Generation Partnership Project (3GPP) specifies Long Term Evolution (LTE), and with the aim of further speeding, specifies LTE-Advanced (hereinbelow, the LTE includes the LTE-Advanced). Further, specifications for 5th generation mobile communication system (5G, also called as New Radio (NR) or Next Generation (NG)) are also being considered.

In Release 15 and Release 16 (NR) of the 3GPP, an operation in a band including FR1 (410 MHz to 7.125 GHz) and FR2 (24.25 GHz to 52.6 GHz) is specified. In the specifications of Release 16 and subsequent releases, an operation in a band exceeding 52.6 GHz is also considered (Non-Patent Document 1). A target frequency range in Study Item (SI) is between 52.6 GHz and 114.25 GHz.

When the carrier frequency is considerably high as in this case, increase in phase noise and propagation loss becomes a problem. Further, it is more sensitive to the peak-to-average power ratio (PAPR) and the power amplifier nonlinearity.

In the NR, initial access, cell detection, and reception quality measurement are performed using SSBs (SS/PBCH Blocks) each composed of SSs (Synchronization Signals) and a downlink PBCH (Physical Broadcast CHannel) (Non-Patent Document 2).

Transmission of SSBs in a time of the transmission periodicity is limited to within 5 milliseconds (a half frame) and the SSBs can be associated with different beams, respectively. In Release 15, the number of SSB indices is 64 (indices 0 to 63).

The SSB indices are mapped into occasions for a random access (RA) procedure, specifically, physical random access channel (PRACH) occasions (PRACH Occasions (ROs)) (Non-Patent Document 3). Document VIVO: "Remaining issues on RACH procedure", 3GPP DRAFT, R1-1803809, 15 April 2018, discusses issues on the cyclic mapping between SSB and ROs.

### PRIOR ART DOCUMENT

### NON-PATENT DOCUMENT

Non-Patent Document 1: 3GPP TR 38.807 V0.1.0, 3rd Generation Partnership Project; Technical Specification Group Radio Access Network; Study on requirements for NR beyond 52.6 GHz (Release 16), 3GPP, March 2019
Non-Patent Document 2: 3GPP TS 38.133 V15.5.0, 3rd Generation Partnership Project; Technical Specification Group Radio Access Network; NR; Requirements for support of radio resource management (Release 15), 3GPP, March 2019
Non-Patent Document 3: 3GPP TS 38.213 V15.5.0, 3rd Generation Partnership Project; Technical Specification Group Radio Access Network; NR; Physical layer procedures for control (Release 15), 3GPP, March 2019

### SUMMARY OF THE INVENTION

The mentioned problems are solved by the subject-matter of the independent claims.
Further preferred embodiments are defined in the dependent claims. Subject matter discussed throughout the following but not falling under the scope of the claims does not form part of the invention.

When a different frequency band different from FR1/FR2, such as a high frequency band exceeding 52.6 GHz as explained above is used, a narrower beam needs to be generated using a massive antenna that has many antenna elements to handle a wide bandwidth and large propagation loss. That is, many beams are required to cover a certain geographical area.

To address this issue, increase of the number of SSB indices is considered. However, the following problems may occur in that case. Specifically, overhead relating to signaling of increased SSBs and PRACH Occasions (ROs) mapped with the SSB indices is increased.

The present invention has been made in view of such circumstances, and one object of the present invention is to provide a terminal capable of operating in an environment in which overhead relating to signaling of SSBs and PRACH Occasions (ROs) is suppressed even in a case in which a different frequency band different from FR1/FR2 is used.

### BRIEF DESCRIPTION OF DRAWINGS

FIG. 1 is an overall schematic configuration diagram of a radio communication system 10.
FIG. 2 is a diagram illustrating frequency ranges used in the radio communication system 10.
FIG. 3 is a diagram illustrating a configuration example of a radio frame, subframes, and slots used in the radio communication system 10.
FIG. 4 is a functional block diagram of UE 200.
FIG. 5 is a diagram illustrating a configuration example of conventional SSBs and ROs.
FIG. 6 is a diagram illustrating a configuration example of SSBs and ROs according to the present embodiment.
FIG. 7 is a diagram illustrating a display example of FDD for SSB/RO using "rach-ConfigCommon" of SIB1.
FIG. 8 is a diagram illustrating a display example of positions of UL subcarriers using "RACH-ConfigGeneric" of SIB1.
FIG. 9 is a diagram illustrating a configuration example of SSBs using a time offset (display of a time offset), and ROs associated with the SSBs.
FIG. 10 is a diagram illustrating an example of a hardware configuration of the UE 200.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Schematic Configuration of Radio Communication System

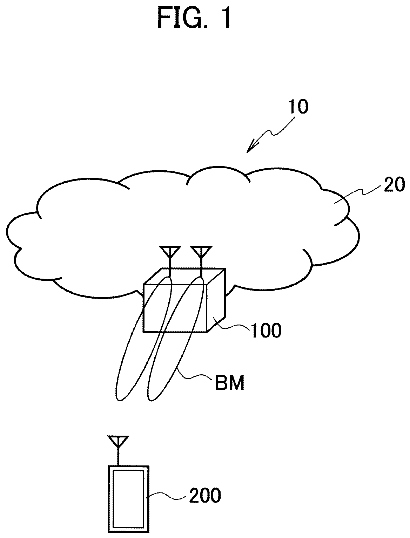

FIG. 1 is an overall schematic configuration diagram of a radio communication system 10 according to the present embodiment. The radio communication system 10 is a radio communication system according to 5G New Radio (NR). The radio communication system 10 includes Next Generation-Radio Access Network 20 (hereinafter, "NG-RAN 20") and a terminal 200 (hereinafter, "UE 200", "User Equipment", "UE").

The NG-RAN 20 includes a radio base station 100 (hereinafter, "gNB 100"). A concrete configuration of the radio communication system 10, including the number of the gNBs and the UEs, is not limited to the example shown in FIG. 1.

The NG-RAN 20 actually includes a plurality of NG-RAN Nodes, in particular, the gNBs (or ng-eNB) . Also, the NG-RAN 20 is connected to a core network (5GC, not shown) according to the 5G. The NG-RAN 20 and the 5GC may be simply expressed as "network".

The gNB 100 is a radio base station according to the 5G. The gNB 100 performs a radio communication with the UE 200 according to the 5G. The gNB 100 and the UE 200 can handle, by controlling a radio signal transmitted from a plurality of antenna elements, Massive MIMO (Multiple-Input Multiple-Output) that generates a beam BM with a higher directivity, carrier aggregation (CA) that bundles a plurality of component carriers (CC) to use, dual connectivity (DC) in which communication is performed simultaneously between two NG-RAN Nodes and the UE, and the like.

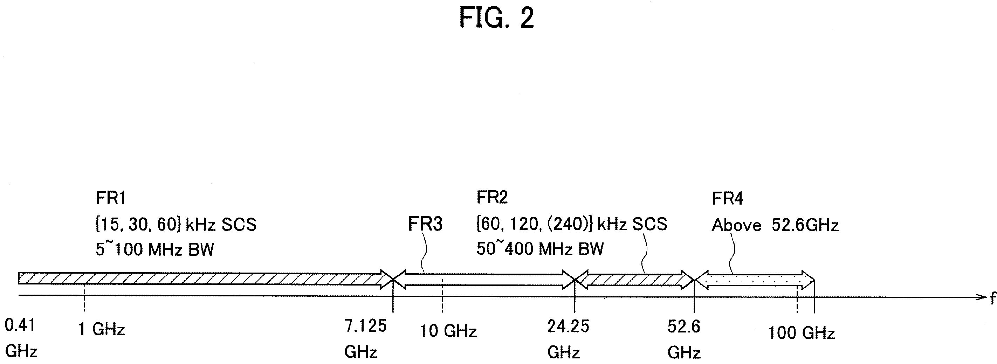

The radio communication system 10 corresponds to a plurality of frequency ranges (FR) . FIG. 2 illustrates frequency ranges used in the radio communication system 10.

As shown in FIG. 2, the radio communication system 10 corresponds to FR1 and FR2. The frequency band of each FR is as below.

FR1: 410 MHz to 7.125 GHz
FR2: 24.25 GHz to 52.6 GHz

In FR1, Sub-Carrier Spacing (SCS) of 15 kHz, 30 kHz, or 60 kHz is used, and a bandwidth (BW) of 5 MHz to 100 MHz is used. FR2 is a higher frequency than FR1. Moreover, FR2 uses SCS of 60 kHz or 120 kHz (240 kHz may be included), and uses a bandwidth (BW) of 50 MHz to 400 MHz.

Note that SCS may be interpreted as numerology. The numerology is defined in 3GPP TS38.300 and corresponds to one subcarrier spacing in the frequency domain.

Furthermore, the radio communication system 10 can handle a frequency band that is higher than the frequency band of FR2. Specifically, the radio communication system 10 can handle a frequency band exceeding 52.6 GHz and up to 114.25 GHz. Here, such a high frequency band is referred to as "FR4" for convenience. FR4 belongs to so-called EHF (extremely high frequency, also called millimeter wave) . FR4 is a temporary name and may be called by another name.

FR4 may be further classified. For example, FR4 may be divided into a frequency range of 70 GHz or less and a frequency range of 70 GHz or more. Alternatively, FR4 may be divided into more frequency ranges, and may be divided in frequencies other than 70 GHz.

Here, the frequency band between FR1 and FR2 is referred to as "FR3" for convenience. FR3 is a frequency band above 7.125 GHz and below 24.25 GHz.

In the present embodiment, FR3 and FR4 are different from the frequency band including FR1 and FR2, and may be called different frequency bands.

Particularly, as described above, in a high frequency band such as FR4, an increase in phase noise between carriers becomes a problem. This may require application of a larger (wider) SCS or a single carrier waveform.

In addition, since it is more sensitive to PAPR and power amplifier nonlinearity, a greater (wider) SCS (and/or fewer FFT points), a PAPR reduction mechanism, or a single carrier waveform may be required.

In the present embodiment, when a band exceeding 52.6 GHz is used, Cyclic Prefix-Orthogonal Frequency Division Multiplexing (CP-OFDM)/Discrete Fourier Transform - Spread (DFT-S-OFDM) having a larger Sub-Carrier Spacing (SCS) may be applied. The DFT-S-OFDM may be applied to not only an uplink (UL) but also a downlink (DL).

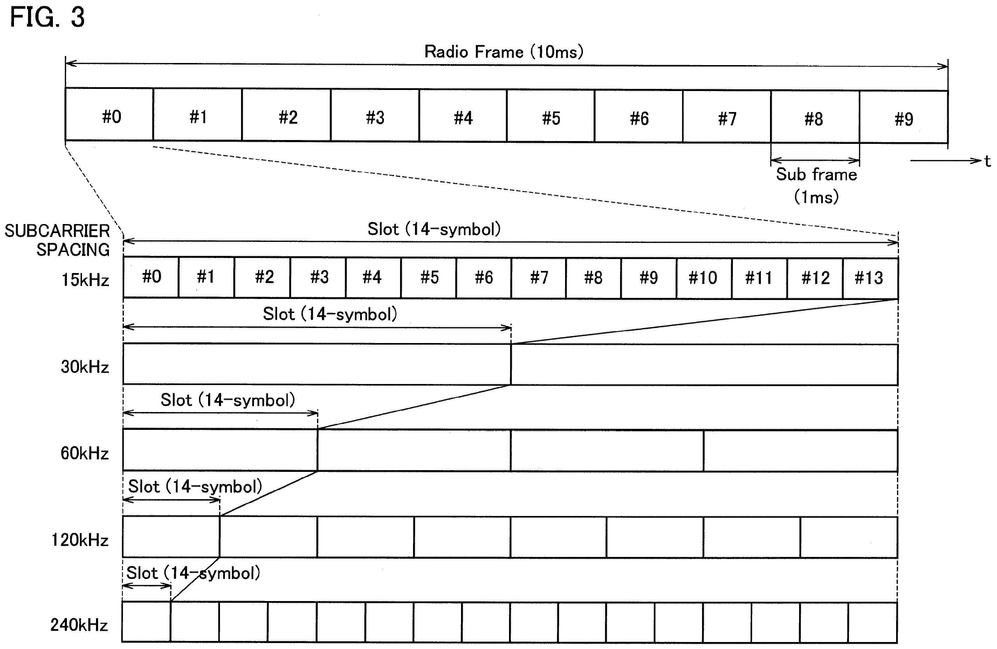

FIG. 3 illustrates a configuration example of a radio frame, subframes, and slots used in the radio communication system 10. Table 1 shows a relation between the SCS and the symbol period.

**[Table 1]**

| SCS | 15 kHz | 30 kHz | 60 kHz | 120 kHz | 240 kHz | 480 kHz | 960 kHz |
|---|---|---|---|---|---|---|---|
| Symbol Period (unit: µs) | 66.6 | 33.3 | 16.65 | 8.325 | 4.1625 | 2.08125 | 1.040625 |

As illustrated in FIG. 3 and Table 1, the symbol period (and the slot period) is shorter as the SCS is larger (wider) . The period in a time domain of an SS/PBCH Block (SSB) is also shorter in the same manner.

When FR4 (a high frequency band) or the like is to be handled, a narrower beam needs to be generated using a massive antenna that has many antenna elements to address a wide bandwidth and large propagation loss. That is, many beams are required to cover a certain geographical area. For instance, in a case of an 80-GHz band, the propagation loss (path loss) is increased by about 9 dB as compared to a case of a 28-GHz band.

As a configuration example of the Massive MIMO, relative to an 8×8 configuration (the number of longitudinal antenna elements × the number of lateral antenna elements) for the 28-GHz band, a 24 (8×3)×24 (8×3) configuration (the number of longitudinal antenna elements × the number of lateral antenna elements) is cited as an example for the 80-GHz band, and the antenna gain is about +9.6 dB.

An SSB is a block of synchronization signal/broadcast channel, which is composed of SSs (Synchronization Signals) and a PBCH (Physical Broadcast CHannel). Principally, the SSBs are periodically transmitted to enable the UE 200 to detect cell IDs or reception timings at a start of communication. In the 5G, the SSBs are also used for measurement of reception quality of each cell.

In a case of Release 15, the followings are defined as setting of SSBs in a serving cell. Specifically, 5, 10, 20, 40, 80, and 160 milliseconds are defined as the transmission periodicity of SSBs. The transmission periodicity of 20 milliseconds is assumed for the UE 200 of initial accessing.

The network (the NG-RAN 20) notifies the UE 200 of index display (ssb-PositionsInBurst) of actually transmitted SSBs, by signaling of system information (SIB1) or a radio resource control layer (RRC) .

Specifically, in a case of FR1, the notification is performed using an 8-bit bitmap of the RRC and the SIB1. In a case of FR2, the notification is performed using a 64-bit bitmap of the RRC, and an 8-bit bitmap of SSBs in a SIB1 group and an 8-bit group bitmap of the SIB1.

In a case of Release 15 (FR2), the maximum number of beams used for SSB transmission is 64. However, in order to cover a certain geographical area with narrow beams, it is preferable to expand the maximum number of beams (for example, to 256). In this case, the number of SSBs also becomes 256 and values larger than #64 are used as indices (SSB indices) to identify the SSBs.

An SSB is composed of synchronization signals (SSs) and a downlink physical broadcast channel (PBCH).

The SSs include a primary synchronization signal (PSS) and a secondary synchronization signal (SSS).

The PSS is a known signal that the UE 200 initially attempts to detect in a cell search procedure. The SSS is a known signal transmitted to detect a physical cell ID in the cell search procedure.

The PBCH includes information, such as a radio frame number (SFN: System Frame Number) and an index for identifying symbol positions of a plurality of SS/PBCH Blocks in a half frame (5 milliseconds), which is required by the UE 200 to establish frame synchronization with an NR cell formed by the gNB 100 after the SS/PBCH Blocks are detected.

The PBCH may also include a system parameter required to receive system information (SIB) . An SSB also includes a broadcast channel demodulation reference signal (DMRS for PBCH) . The DMRS for PBCH is a known signal transmitted to measure a radio channel state for PBCH demodulation.

The UE 200 assumes that the SSBs are respectively associated with beams BM having different transmission directions (coverages). Accordingly, the UE 200 located in an NR cell can receive any of the beams BM and acquire an SSB to start initial access and SSB detection/measurement.

The transmission patterns of the SSBs vary according to the SCS, the frequency range (FR), or other parameters. It is not always necessary to transmit all the SSBs. Only few SSBs may be selectively transmitted according to the network requirements, status, or the like, so that the UE 200 may be notified of SSBs that are transmitted and SSBs that are not transmitted.

The UE 200 is notified of the transmission patterns of the SSBs by an RRC IE (Information Element) called ssb-PositionsInBurst explained above.

The UE 200 is provided with transmission occasions (PRACH Occasions (ROs)) for one PRACH (Physical Random Access Channel) or a plurality of PRACHs associated with an SSB (SS/PBCH Block).

When the number of SSBs, that is, the number of beams and the number of ROs are increased, overhead relating to signaling of the increased SSBs and ROs mapped with the SSB indices is increased as explained above.

Specifically, if a time division multiplexing (TDM) beam sweeping method that can handle analog beam forming as defined in Release 15 is applied to SSBs as it is, only a single analog beam can be set in an entire frequency bandwidth in a specific time (symbol) . Therefore, analog beams for all the SSBs and ROs are required and overhead is increased correspondingly.

In the present embodiment, a configuration of SSBs and ROs that can suppress this overhead, specifically, arrangement of SSBs and ROs in a frequency domain and a time domain is applied. Accordingly, the UE 200 can assume such a configuration of the SSBs and the ROs and can operate in an environment in which overhead relating to signaling of SSBs and PRACH Occasions (ROs) is suppressed.

### (2) Functional Block Configuration of Radio Communication System

A functional block configuration of the radio communication system 10 is explained next. Specifically, a functional block configuration of the UE 200 is explained.

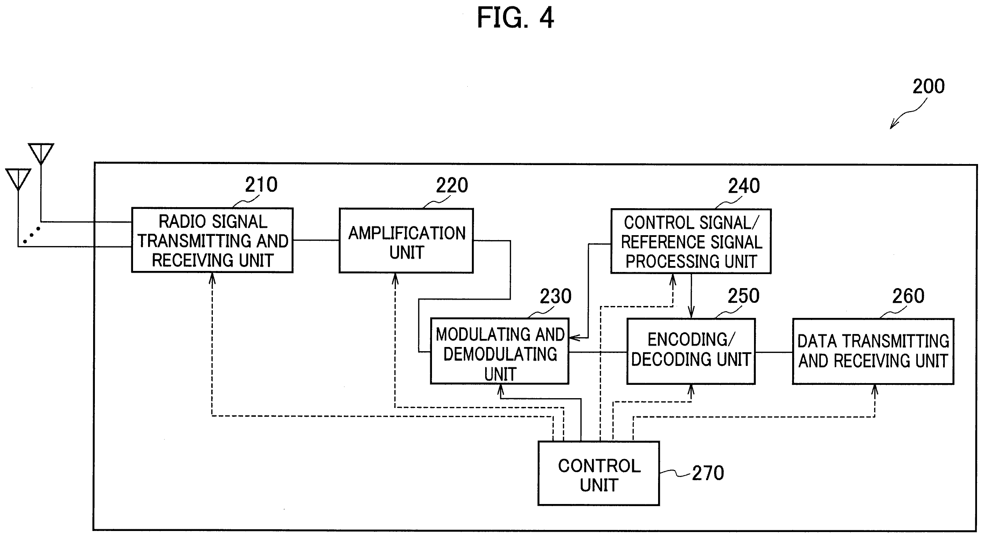

FIG. 4 is a functional block diagram of the UE 200. As illustrated in FIG. 4, the UE 200 includes a radio signal transmitting and receiving unit 210, an amplifier unit 220, a modulating and demodulating unit 230, a control signal/reference signal processing unit 240, an encoding/decoding unit 250, a data transmitting and receiving unit 260, and a control unit 270.

The radio signal transmitting and receiving unit 210 transmits and receives a radio signal according to the NR. The radio signal transmitting and receiving unit 210 corresponds to Massive MIMO, CA that bundles a plurality of CCs to use, DC in which communication is performed simultaneously between the UE and two NG-RAN Nodes, and the like.

In the present embodiment, the radio signal transmitting and receiving unit 210 can receive synchronization signal blocks, specifically, SSBs (SS/PBCH Blocks) in one frequency range or a plurality of frequency ranges, specifically, a different frequency band different from a frequency band including FR1 or FR2, that is, FR3 or FR4.

In the present embodiment, on the basis of received SSBs, the radio signal transmitting and receiving unit 210 transmits Random Access Preamble in a PRACH Occasion (RO) associated with the received SSBs.

In the present embodiment, the radio signal transmitting and receiving unit 210 forms a receiving unit and a transmitting unit.

As explained above, a RO is an occasion for transmitting a preamble via a random access channel (PRACH). A random access (RA) procedure performed by the UE 200 may be a 4-step RA procedure (contention-based) or a 2-step RA procedure.

Specifically, in the contention-based RA procedure, transmission of Random Access Preamble, Random Access Response, Scheduled Transmission, and Contention Resolution is performed in this order. The Random Access Preamble, the Random Access Response, the Scheduled Transmission, and the Contention Resolution may be called Msg. 1, 2, 3, and 4, respectively. Note that the RA procedure may include a contention-free random access (CFRA) where a sequence is started by notification of allocation of Random Access Preamble to the UE 200 by the gNB 100.

In the 2-step RA procedure, transmission of Random Access Preamble and Random Access Response is performed in this order. The Random Access Preamble and the Random Access Response in the 2-step RA procedure may be called other names, respectively. Alternatively, the Random Access Preamble and the Random Access Response in the 2-step RA procedure may be called Msg. A and B, respectively.

In the present embodiment, an SSB and a RO are allocated to a same position in the time direction using the frequency division duplex (FDD) as will be explained later. That is, while allocated on a same symbol, an SSB and a RO are respectively allocated in different frequency bands, specifically, different subcarriers according to the FDD.

The time direction may also be called time domain, symbol period, symbol time, or the like. Further, it suffices that a same position is located in a certain range in the time direction. While typically meaning a same symbol period, the certain range may be a plurality of symbol periods or a half symbol period, a subframe, or a half radio frame. A symbol may also be called OFDM symbol.

The radio signal transmitting and receiving unit 210 transmits Random Access Preamble in a RO after receiving an SSB. Specifically, the radio signal transmitting and receiving unit 210 transmits Random Access Preamble in a RO associated with the received SSB. In a case in which the SSB and the RO are allocated to a same position (same symbol) in the time direction, the radio signal transmitting and receiving unit 210 transmits Random Access Preamble in a RO following a timing in which the SSB is received.

The RO following a timing in which the SSB is received may be a symbol next to the SSB, or may be a subsequent RO a plurality of symbols away from the SSB and for which a same beam BM as that of the SSB is used.

Frequencies to which SSBs and ROs associated with the SSBs are allocated may vary depending on terminals (UEs). Note that a frequency may indicate a center frequency or a start frequency of a frequency band, or may indicate the frequency band itself.

In the present embodiment, the maximum number (L) of SSBs is expanded to 256 and the network (the gNB 100) can transmit a plurality of SSBs and a plurality of ROs in same time positions (which may be replaced with time resources, time domains, or the like) as will be explained later.

The radio signal transmitting and receiving unit 210 can receive SSBs where the range of SSB indices is expanded relative to a case in which a frequency band including FR1 or FR2 is used.

The amplifier unit 220 is formed of a PA (Power Amplifier) /LNA (Low Noise Amplifier), or the like. The amplifier unit 220 amplifies a signal output from the modulating and demodulating unit 230 to a predetermined power level. The amplifier unit 220 also amplifies an RF signal output from the radio signal transmitting and receiving unit 210.

The modulating and demodulating unit 230 performs data modulation/demodulation, transmission power setting, resource block allocation, and the like, for each predetermined communication destination (the gNB 100 or other gNBs).

As explained above, the CP-OFDM and the DFT-S-OFDM are applicable in the present embodiment. Further, the DFT-S-OFDM can be used for the uplink (UL) and the downlink (DL) in the present embodiment.

The control signal/reference signal processing unit 240 executes processing relating to various control signals transmitted and received by the UE 200 and processing relating to various reference signals transmitted and received by the UE 200.

Specifically, the control signal/reference signal processing unit 240 receives various control signals transmitted via a predetermined control channel from the gNB 100, for example, a control signal for the radio resource control layer (RRC). The control signal/reference signal processing unit 240 also transmits various control signals to the gNB 100 via a predetermined control channel.

Moreover, the control signal/reference signal processing unit 240 executes processing by using reference signals (RS) such as Demodulation reference signal (DMRS) and Phase Tracking Reference Signal (PTRS).

DMRS is a known reference signal (pilot signal) for estimating a fading channel used for data demodulation between a base station specific for a terminal and the terminal. PTRS is a terminal-specific reference signal for the purpose of estimating phase noise which is an issue in the high frequency band.

The reference signal includes, apart from DMRS and PTRS, Channel State Information-Reference Signal (CSI-RS) and Sounding Reference Signal (SRS).
Moreover, a channel includes a control channel and a data channel. A control channel includes PDCCH (Physical Downlink Control Channel), PUCCH (Physical Uplink Control Channel), RACH (Downlink Control Information (DCI) including Random Access Channel, Random Access Radio Network Temporary Identifier (RA-RNTI)), Physical Broadcast Channel (PBCH), and the like.

A data channel includes PDSCH (Physical Downlink Shared Channel), PUSCH (Physical Downlink Shared Channel), and the like. Data means data transmitted via a data channel.

The encoding/decoding unit 250 performs data division/connection, channel coding/decoding, and the like for each predetermined communication destination (the gNB 100 or other gNBs) .

Specifically, the encoding/decoding unit 250 divides data output from the data transmitting and receiving unit 260 into data of a predetermined size and performs channel coding of the divided data. The encoding/decoding unit 250 decodes data output from the modulating and demodulating unit 230 and connects the decoded data to each other.

The data transmitting and receiving unit 260 transmits and receives Protocol Data Unit (PDU) and Service Data Unit (SDU). Specifically, the data transmitting and receiving unit 260 executes PDU/SDU assembly/disassembly and the like in multiple layers (such as a medium access control layer (MAC), a radio link control layer (RLC), and a packet data convergence protocol layer (PDCP)). The data transmitting and receiving unit 260 performs data error correction and retransmission control on the basis of a hybrid ARQ (Hybrid automatic repeat request).

The control unit 270 controls the functional blocks constituting the UE 200. Particularly, in the present embodiment, the control unit 270 controls receiving of SSBs by the radio signal transmitting and receiving unit 210, judging of a PRACH Occasion (RO) associated with the received SSBs, transmission of Random Access Preamble in the relevant RO, and the like.

### (3) Operation of Radio Communication System

An operation of the radio communication system 10 is explained next. Specifically, a configuration example of a synchronization signal block (SSB) and a PRACH Occasion (RO) associated with the SSB is explained and an operation of the UE 200 to receive an SSB and transmit Random Access Preamble in a RO associated with the SSB is also explained.

### (3.1) Example of Configuration of Conventional SSB and RO

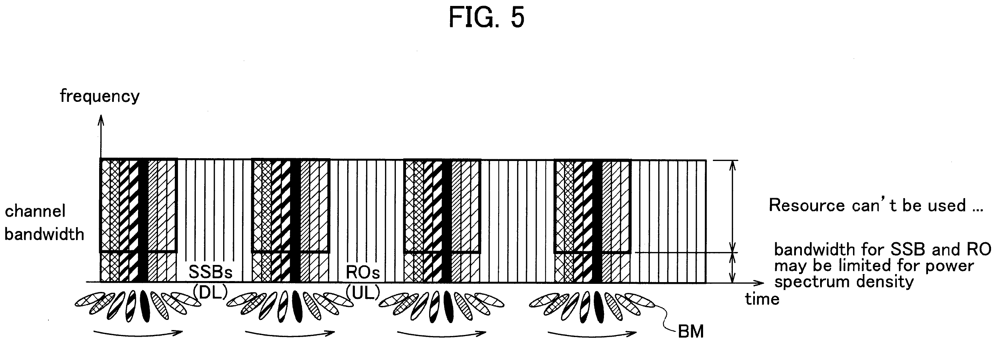

To begin with, a configuration example of conventional SSBs and ROs is explained. FIG. 5 illustrates a configuration example of conventional SSBs and ROs.

As illustrated in FIG. 5, in the configuration example of conventional SSBs and ROs, specifically, an arrangement example of SSBs and ROs in the frequency domain and the time domain, SSBs and ROs associated with the SSBs are subjected to time division multiplexing (TDM) and are allocated to different time domains (symbols), respectively.

As explained above, SSBs are associated with different beams BM, respectively. The UE 200 receives an SSB transmitted via any of these beams BM. In the configuration example illustrated in FIG. 5, it is assumed that only resources for SSBs and ROs can be mapped and a plurality of transmission points are used (for example, a plurality of antenna panels).

The SSBs and the ROs are allocated to some resources (subcarriers) in the frequency direction (the channel bandwidth) from the viewpoint of the power spectrum density. Therefore, the remaining resources (subcarriers) in the frequency direction cannot be used as SSBs or ROs (thick line frames in FIG. 5).

Particularly, in order to suppress overhead relating to signaling of SSBs increased along with the number of beams, and ROs associated with the SSBs, rescaling of the SSBs and the ROs in the time domain is considered. A specific example is expansion of the subcarrier spacing (SCS) (480kHz, 960 kHz, and the like).

Alternatively, rescaling of SSBs and ROs in the frequency domain is also considered. In this case, a higher power spectrum density is required and this may contribute to reduction of the number of beams.

### (3.2) Configuration Example of SSB and RO according to Present Embodiment

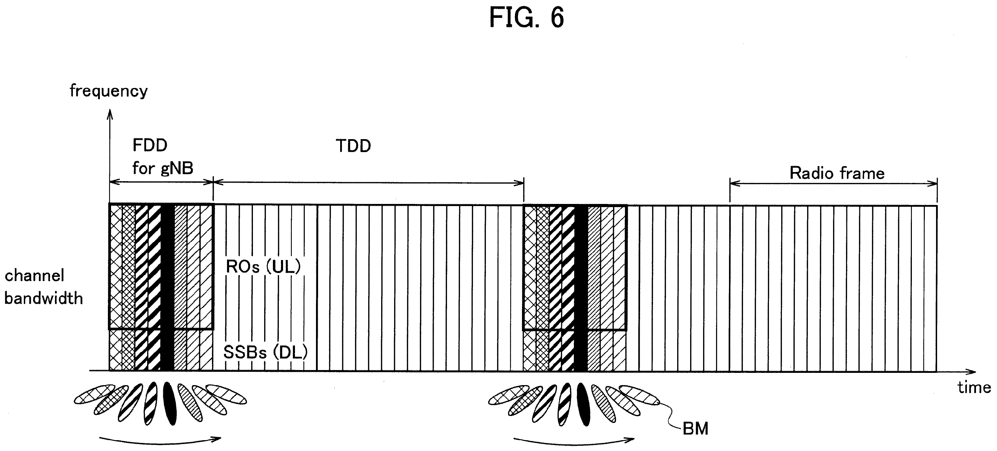

FIG. 6 illustrates a configuration example of SSBs and ROs according to the present embodiment. As illustrated in FIG. 6, SSBs and ROs are arranged at same positions in the time direction, respectively, using the FDD. Specifically, an SSB and a RO corresponding to a same SSB index are mapped into a same symbol (OFDM symbol) .

In the example illustrated in FIG. 6, an SSB transmitted via the downlink (DL) and a RO transmitted via the uplink (UL) are mapped into a same symbol. FIG. 6 illustrates an example in which an SSB and a RO corresponding to a same SSB index are mapped into a same symbol.

The SSBs and the ROs are not necessarily associated on a one-to-one basis. That is, one RO may be associated with n SSBs or n ROs may be associated with one SSB.

In a case of this configuration of SSBs and ROs, the UE 200 does not need to perform processing according to the FFD. It suffices that the UE 200 receives a receivable SSB (beam), detects the SSs and the PBCH included in the SSB, and transmits Random Access Preamble via the PRACH in a next timing (which may also be replaced with next periodicity) to a RO associated with the SSB.

For example, in the example illustrated in FIG. 6, when the UE 200 receives an SSB in a first periodicity (the left side in FIG. 6), it suffices that the UE 200 transmits a RO in the next periodicity (the right side in FIG. 6). Note that Random Access Preamble may be transmitted in a next timing to a RO in the same periodicity as will be explained later.

Meanwhile, the frequency to which ROs are allocated may differ according to UEs. That is, ROs are transmitted using different subcarriers according to UEs. Therefore, the gNB 100 requires processing in accordance with the FDD to perform transmission of SSBs and reception of PRACHs in a same time.

### (3.3) Notification of SSB and RO Configuration

A method for notifying the UE 200 of the abovementioned configuration of SSBs and ROs in a case of using the configuration is explained next.

### (3.3.1) FDD display for SSB/RO

As explained above, when SSBs and ROs are transmitted and received by the FDD, there are the following options for notifying the UE 200 of usage of the FDD.
· (option 0-1) : the UE 200 is not notified of FDD display for SSB/RO (that is, the FDD display is defined (fixed) in specifications)
· (option 0-2): the UE 200 is notified of FDD display for SSB/RO

Notification of whether the FDD for SSB/RO is applied can be performed using, for example, "rach-ConfigCommon" of SIB1.

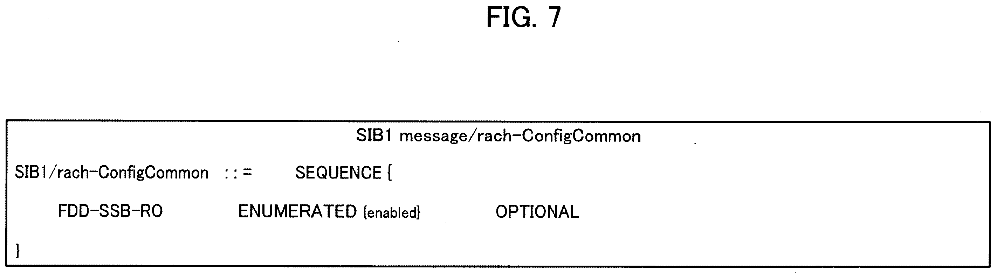

FIG. 7 illustrates a display example of the FDD for SSB/RO using "rach-ConfigCommon" of SIB1. As illustrated in FIG. 7, whether the FDD for SSB/RO is applied is indicated by a FDD-SSB-RO field.

### (3.3.2) Display of RO in Time Domain and Frequency Domain

There are the following options for notification of positions of ROs in the time domain and the frequency domain.
· time domain
   · (option 1-1): the UE 200 uses same timings as those for SSBs (There is no explicit instruction. This is applied mainly to option 0-2)
   · (option 1-2): specifications of Release 15 are expanded (the UE 200 is notified of a new PRACH setting index in consideration of the longest PRACH period (the number of symbols), for example, the timing of an SSB index, a start symbol in an SSB index)
· frequency domain
   (option 2-1): identical to specifications (msg1-FrequencyStart) of Release 15
   · (option 2-2): positions of UL subcarriers are added to the specifications (msg1-FrequencyStart) of Release 15 (for example, "RACH-ConfigGeneric" of SIB1 is used).

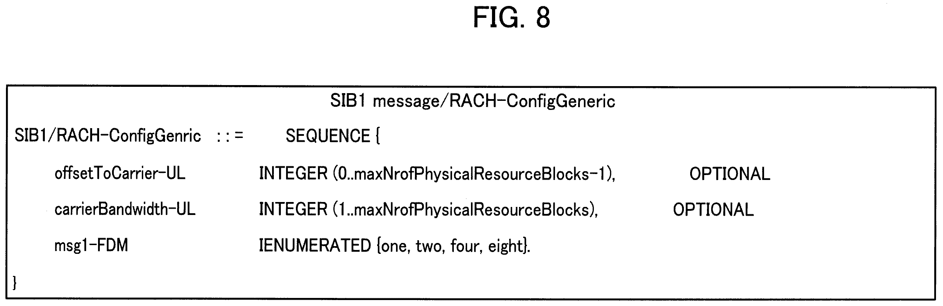

FIG. 8 illustrates a display example of positions of UL subcarriers using "RACH-ConfigGeneric" of SIB1. As illustrated in FIG. 8, the positions of UL subcarriers associated with ROs are indicated, for example, by a offsetToCarrier-UL field.

Note that "msg1-FDM" illustrated in FIG. 8 indicates the number of ROs subjected to frequency division multiplexing (FDM) in one instance as defined in Release 15.

### (3.2) Offset setting between SSB and RO

In order to shorten delay from a timing of reception (which may be replaced with detection) of an SSB by the UE 200 to transmission of Random Access Preamble via the PRACH, a time offset, T_ssb (the unit: SSB), and n may be set.

It is indicated a RO is at a position that is n*T_ssb offset after an SSB. Further, n is set to 1, 2, ..., that is, can be set to a natural number.

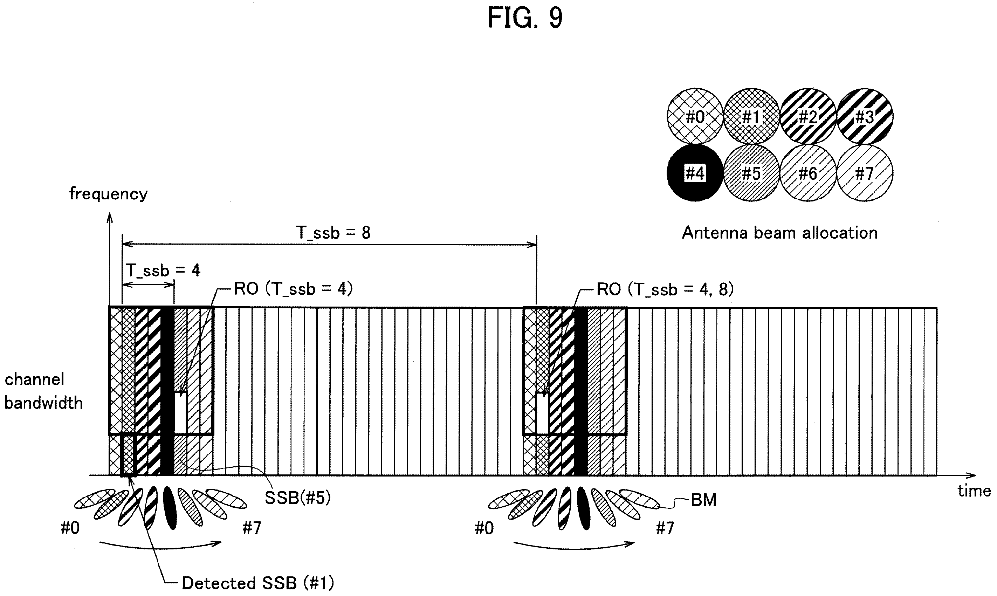

FIG. 9 illustrates a configuration example of SSBs using a time offset (display of a time offset), and ROs associated with the SSBs.

As illustrated in FIG. 9, when the UE 200 detects an SSB (#1), for example, in a case in which T_ssb=4, a RO is judged to be at a position of an SSB (#5). In this case, a beam BM with which the SSB is received and a beam BM with which the RO is transmitted may differ in the transmission direction, coverage, or QCL (Quasi Co-Location) assumption. However, it is assumed that they are similar, such as adjacent to each other.

For example, in a case in which T_ssb=8, a beam BM with which an SSB is received and a beam BM with which a RO is transmitted are same in the transmission direction, coverage, or QCL assumption as illustrated in FIG. 9. That is, the UE 200 transmits Random Access Preamble in the following RO using the same beam BM as the beam BM with which the SSB is received.

Note that, while being an SSB in this example, the unit of T_ssb may be a symbol or a slot.

### (4) Advantageous Effects

According to the abovementioned embodiment, the following effects can be achieved. Specifically, in the present embodiment, SSBs and ROs are allocated to same positions (symbols) in the time direction, respectively, using the FDD. The UE 200 assumes this configuration of SSBs and ROs and transmits Random Access Preamble via a PRACH in a RO associated with a received SSB.

Since SSBs and ROs are allocated onto same symbols, respectively, using the FDD in this way, overhead relating to signaling of SSBs and PRACH Occasions (ROs) mapped with SSB indices can be suppressed and effective signaling of SSBs and ROs to the UE 200 can be realized even when the number of SSBs and ROs is increased.

Accordingly, the UE 200 can operate in an environment in which overhead relating to signaling of SSBs and ROs is suppressed.

In the present embodiment, the UE 200 can transmit Random Access Preamble in a RO after an SSB is received. Therefore, the UE 200 can reliably transmit Random Access Preamble even in a case in which SSBs and ROs are allocated onto same symbols, respectively, using the FDD.

In the present embodiment, frequencies to which SSBs and ROs are allocated may differ according to UEs. Therefore, even in a case in which SSBs and ROs are allocated on same symbols using the FDD, each UE can realize transmission and reception of appropriate SSBs and ROs by accessing a different frequency.

### (5) Other Embodiments

Although the contents of the present invention have been described by way of the embodiments, it is obvious to those skilled in the art that the present invention is not limited to what is written here and that various modifications and improvements thereof are possible.

For instance, in the abovementioned embodiment, the description was made with a high frequency band such as FR4, that is, a frequency band exceeding 52.6 GHz as an example. However, at least any of the operation examples explained above may be applied to other frequency ranges such as FR3.

Furthermore, as explained above, FR4 may be divided into a frequency range of 70 GHz and lower and a frequency range of 70 GHz and higher. The correspondence between the frequency range and the configuration of SSBs and ROs may be changed, for example, the abovementioned configuration example of SSBs and ROs is applied to the frequency range of 70 GHz and higher, as deemed appropriate.

Moreover, the block diagram used for explaining the embodiments (FIG. 4) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

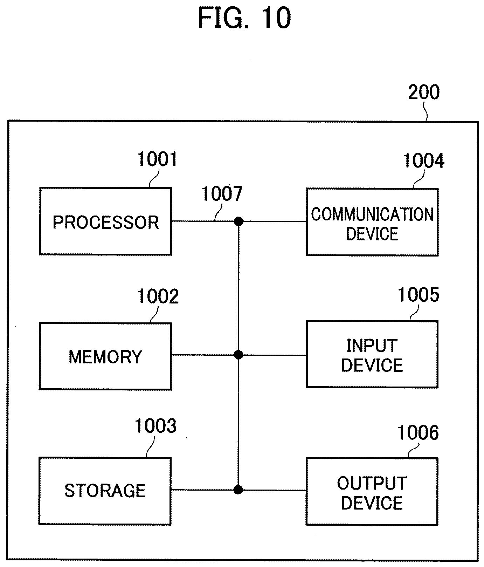

Furthermore, the UE 200 explained above can function as a computer that performs the processing of the radio communication method of the present disclosure. FIG. 10 is a diagram illustrating an example of a hardware configuration of the UE 200. As shown in FIG. 10, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the UE 200 (see FIG. 4) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the UE 200 by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission/reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto) . In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer) . It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS) ", "radio base station", "fixed station", "NodeB", "eNodeB (eNB) ", "gNodeB (gNB) ", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors) . In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type) . At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same) . For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or more frames in the time domain. Each frame or frames in the time domain may be referred to as a subframe.

A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the numerology. The number of subcarriers included in the RB may be determined based on the numerology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB : PRB), a subcarrier group (Sub-Carrier Group : SCG), a resource element group (Resource Element Group : REG), PRB pair, RB pair, etc.

A resource block may be configured by one or a plurality of resource elements (Resource Element: RE). For example, one RE may be a radio resource area of one subcarrier and one symbol.

A bandwidth part (Bandwidth Part: BWP) (which may be called a partial bandwidth, etc.) may represent a subset of contiguous common resource blocks (RBs) for a certain numerology in a certain carrier. Here, a common RB may be specified by RB index based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

Although the present disclosure has been described in detail above, it will be obvious to those skilled in the art that the present disclosure is not limited to the embodiments described in this disclosure.

### EXPLANATION OF REFERENCE NUMERALS

- 10: Radio communication system
- 20: NG-RAN
- 100: gNB
- 200: UE
- 210: Radio signal transmitting and receiving unit
- 220: Amplifier unit
- 230: Modulating and demodulating unit
- 240: Control signal/reference signal processing unit
- 250: Encoding/decoding unit
- 260: Data transmitting and receiving unit
- 270: Control unit
- 1001: Processor
- 1002: Memory
- 1003: Storage
- 1004: Communication device
- 1005: Input device
- 1006: Output device
- 1007: Bus

## Claims

1. A terminal (200) comprising:
a receiving unit (210) configured to receive a synchronization signal block in a different frequency band different from a frequency band including a frequency range, wherein the frequency range is 410 MHz to 7.125 GHz or 24.25 GHz to 52.6 GHz; and
a transmitting unit (210) configured to transmit a preamble in a transmission occasion for the preamble via a random access channel on a basis of the synchronization signal block, wherein
the synchronization signal block and the transmission occasion are allocated to a symbol using frequency division duplex.

2. The terminal (200) according to claim 1, wherein the transmitting unit (210) is configured to transmit the preamble in the transmission occasion after the receiving unit (210) receives the synchronization signal block.

3. The terminal (200) according to claim 1 or 2, wherein frequencies to which the synchronization signal block and the transmission occasion are allocated differ depending on the terminal.

## Patentansprüche

1. Endgerät (200), umfassend:
eine Empfangseinheit (210), die dazu konfiguriert ist, einen Synchronisationssignalblock in einem unterschiedlichen Frequenzband zu empfangen, das sich von einem Frequenzband unterscheidet, das einen Frequenzbereich einschließt, wobei der Frequenzbereich 410 MHz bis 7,125 GHz oder 24,25 GHz bis 52,6 GHz beträgt; und
eine Sendeeinheit (210), die dazu konfiguriert ist, bei einer Sendegelegenheit eine Präambel über einen Zufallszugriffskanal auf der Grundlage des Synchronisationssignalblocks zu senden, wobei
der Synchronisationssignalblock und die Sendegelegenheit einem Symbol unter Verwendung von Frequenzduplex zugewiesen werden.

2. Endgerät (200) nach Anspruch 1, wobei die Sendeeinheit (210) dazu konfiguriert ist, die Präambel bei der Sendegelegenheit nach dem Empfang des Synchronisationssignalblocks durch die Empfangseinheit (210) zu senden.

3. Endgerät (200) nach Anspruch 1 oder 2, wobei die Frequenzen, denen der Synchronisationssignalblock und die Sendegelegenheit zugewiesen sind, je nach Endgerät unterschiedlich sind.

## Revendications

1. Terminal (200) comprenant :
une unité de réception (210) configurée pour recevoir un bloc de signal de synchronisation dans une bande de fréquence différente, différente d'une bande de fréquence incluant une plage de fréquences, dans laquelle la plage de fréquence est de 410 MHz à 7,125 GHz ou de 24,25 GHz à 52,6 GHz ; et
une unité de transmission (210) configurée pour transmettre un préambule à une occasion de transmission du préambule via un canal d'accès aléatoire sur la base du bloc de signal de synchronisation, dans lequel
le bloc de signal de synchronisation et l'occasion de transmission sont affectés à un symbole à l'aide du duplex de division de fréquence.

2. Terminal (200) selon la revendication 1, dans lequel l'unité de transmission (210) est configurée pour transmettre le préambule à l'occasion de transmission après que l'unité de réception (210) reçoit le bloc de signal de synchronisation.

3. Terminal (200) selon la revendication 1 ou la revendication 2, dans lequel les fréquences auxquelles le bloc de signal de synchronisation et l'occasion de transmission sont attribués diffèrent en fonction du terminal.
